# EUROPÄISCHE PATENTANMELDUNG

(11) **EP 4 000 375 A1**
(43) Veröffentlichungstag der Anmeldung: **25.05.2022**
(21) Anmeldenummer: 21208159.0
(22) Anmeldetag: 15.11.2021
(51) Int. Cl.: A01D 43/08, A01F 29/01

(54) **ANBAUHÄCKSLER MIT EINEM FÖRDERKANAL ZUM FÖRDERN VON ERNTEGUT**

(30) Priorität: 16.11.2020 DE 102020130146
(71) Anmelder: Maschinenfabrik Bernard Krone GmbH & Co. KG, 48480 Spelle (DE)
(72) Erfinder: Horstmann, Josef, 49479 Ibbenbüren (DE); Weiss, Peter, 48488 Emsbüren (DE); Kreyenhagen, Michael, 49163 Bohmte (DE); Mösker, Markus, 48480 Lünne (DE); Rickert, Clemens, 48683 Ahaus (DE); Schnelting, Mathias, 46354 Südlohn-Oeding (DE)

(57) **Zusammenfassung**

Die vorliegende Erfindung betrifft einen Anbauhäcksler (1), der zum Anbauen an einen Schlepper (3), insbesondere an ein Front- oder Heckhubwerk eines Schleppers (3), vorgesehen ist, und der einen Kanalanschluss (21) zum Anbauen eines Vorsatzgerätes (2) aufweist, wobei sich dem Kanalanschluss (21) in einer Gutflussrichtung (50) ein Förderkanal (14) anschließt, der ein Vorpressaggregat (6) und ein diesem nachgeordnetes Zerkleinerungsaggregat (7) durchsetzt, wobei dem Zerkleinerungsaggregat (7) ein Auswurfstutzen (91) nachgeordnet ist, durch den das Erntegut (5) auswerfbar ist, und wobei sich das Vorpressaggregat (6) unmittelbar am Kanalanschluss (21) anschließt und wenigstens zwei Vorpresswalzen (61-62) oder mehr umfasst, wobei der Förderkanal (14) im Vorpressaggregat (6) einen spitzen Förderwinkel (60) zu einem Eintrittswinkel des Ernteguts in den Kanalanschluss (21) aufweist. Die vorliegende Erfindung betrifft weiterhin eine Häckselanordnung mit einem Anbauhäcksler (1) und einem Vorsatzgerät (2), sowie einen Arbeitszug (100) mit einem Schlepper (3) und einem solchen Anbauhäcksler (1) oder einer solchen Häckselanordnung.

## Beschreibung

Die vorliegende Erfindung betrifft einen Anbauhäcksler, der zum Anbauen an einen Schlepper, insbesondere an ein Front- oder Heckhubwerk eines Schleppers, vorgesehen ist, und der einen Kanalanschluss zum Anbauen eines Vorsatzgerätes aufweist, wobei sich dem Kanalanschluss in einer Gutflussrichtung ein Förderkanal anschließt, der ein Vorpressaggregat und ein diesem nachgeordnetes Zerkleinerungsaggregat durchsetzt, wobei dem Zerkleinerungsaggregat ein Auswurfstutzen nachgeordnet ist, durch den das Erntegut auswerfbar ist. Die vorliegende Erfindung betrifft weiterhin eine Häckselanordnung mit einem Anbauhäcksler und einem Vorsatzgerät, sowie einen Arbeitszug mit einem Schlepper und einem solchen Anbauhäcksler oder einer solchen Häckselanordnung.

Anbauhäcksler sind zum Ernten und Häckseln von für die Silage verwendetem Erntegut vorgesehen, vor allem von Gras, Heu und Mais, aber auch von Ganzpflanzen. Sie werden an einen Schlepper angehängt oder angebaut. Dabei sind aus frühen Zeiten Anbauhäcksler bekannt, die zum Abernten von ein bis drei Reihen Mais genutzt werden. In dieser Ausführungsform werden die Anbauhäcksler zumeist seitlich des Schleppers geführt.

Später sind auch Anbauhäcksler gebaut worden, die an einen Schlepper anbaubar sind, und die einen Kanalanschluss aufweisen, an den Vorsatzgeräte, die sich auch für selbstfahrende Feldhäcksler eignen, modular anbaubar sind. Dadurch können Vorsatzgeräte verschiedener Typen mit demselben Anbauhäcksler genutzt werden.

Um Vorsatzgeräte modular nutzen zu können, wird der Anbauhäcksler häufig an das Front- oder Heckhubwerk des Schleppers angebaut. Bei Anbau an das Heckhubwerk ist es bekannt, den Schlepper während des Erntebetriebs auf dem Feld im Rückwärtsfahrbetrieb zu nutzen. Im Vergleich zum Anbau des Anbauhäckslers an das Fronthubwerk und Betrieb des Schleppers während des Erntebetriebs auf dem Feld im Vorwärtsfahrbetrieb kann der Schlepper im Rückwärtsfahrbetrieb eine größere Last tragen.

Für den Rückwärtsfahrbetrieb sind Schlepper bekannt, bei denen das Lenkrad sowie der Sitz in einer Fahrerkabine gedreht werden können, so dass der Sitz hinter der Frontscheibe und das Lenkrad vor der Heckscheibe angeordnet sind. Weiterhin sind Schlepper bekannt, bei denen die gesamte Kabine um einen Drehwinkel von 180° drehbar ist. Im für den Rückwärtsfahrbetrieb gedrehten Zustand müssen bei diesen Schleppern gegebenenfalls die Form sowie Aufbauten der Kabine berücksichtigt werden.

In früheren Zeiten war die Größe der anbaubaren Vorsatzgeräte durch die Leistungsfähigkeit der Schlepper begrenzt. Die heutzutage bekannten Anbauhäcksler sind im Gegensatz dazu nicht mehr für die Leistungsfähigkeit großer Schlepper ausgelegt.

Aufgabe der vorliegenden Erfindung ist es, einen leistungsstarken Anbauhäcksler zu schaffen, der sich zum Anbauen großer Vorsatzgeräte an leistungsstarke Schlepper, insbesondere mit 500PS und mehr, eignet.

Die Aufgabe wird gelöst mit einem Anbauhäcksler mit den Merkmalen des unabhängigen Patentanspruchs 1, einer Häckselanordnung mit den Merkmalen des unabhängigen Patentanspruchs 13, einem Arbeitszug mit den Merkmalen des unabhängigen Patentanspruchs 14. Vorteilhafte Ausführungsformen sind den abhängigen Ansprüchen entnehmbar.

Dafür wird ein Anbauhäcksler geschaffen. Der Anbauhäcksler ist zum Anbauen an einen Schlepper vorgesehen. Vorzugsweise ist er an ein Front- oder Heckhubwerk des Schleppers anbaubar. Der Schlepper weist vorzugsweise 500PS oder mehr auf.

Der Anbauhäcksler weist einen Kanalanschluss auf, an den ein Vorsatzgerät anbaubar ist. Ein solches Vorsatzgerät kann zum Ernten von Mais, zum Schneiden und/oder Aufnehmen von Gras oder Heu, oder zum Ernten von Ganzpflanzen vorgesehen sein. Es ist insbesondere auch an selbstfahrende Feldhäcksler anbaubar.

Dem Kanalanschluss des Anbauhäckslers schließt sich in einer Gutflussrichtung ein Förderkanal an, der ein Vorpressaggregat und ein diesem nachgeordnetes Zerkleinerungsaggregat durchsetzt. Dem Zerkleinerungsaggregat ist weiterhin ein Auswurfstutzen nachgeordnet, durch den das Erntegut auswerfbar ist.

Zwischen dem Zerkleinerungsaggregat und dem Auswurfstutzen kann in einer Maisernteanordnung zudem ein Aufbereiter angeordnet sein, den der Förderkanal durchsetzt. Der Aufbereiter ist zum Aufbrechen der Maiskörner vorgesehen, so dass eine Schale der Maiskörner aufgebrochen wird und Stärke im Innern der Maiskörner von außen zugänglich ist. Der Aufbereiter ist in einer Heuernteanordnung, in der Gras oder Heu geerntet werden, nicht vorgesehen.

Am Auswurfstutzen ist bevorzugt ein Auswurfrohr befestigt. Das Auswurfrohr dient als Verlängerung des Auswurfstutzens und ist zum Auswerfen des Ernteguts auf einen Ladewagen vorgesehen. Vorzugsweise ist es dafür drehbar und/oder höhenverstellbar am Auswurfstutzen befestigt.

Der Anbauhäcksler zeichnet sich dadurch aus, dass sich das Vorpressaggregat dem Kanalanschluss unmittelbar anschließt, und wenigstens zwei Vorpresswalzen oder mehr aufweist, wobei der Förderkanal im Vorpressaggregat einen spitzen Förderwinkel zu einem Eintrittswinkel des Ernteguts in den Kanalanschluss aufweist. Dabei ist der Eintrittswinkel ein gegenüber einer Arbeitsrichtung gemessener Winkel, das ist insbesondere in ebenem Gelände eine im Wesentlichen horizontale Richtung. Der dadurch vergleichsweise steile Anstieg des Förderkanals im Vorpressaggregat bewirkt, dass der Anbauhäcksler in Arbeitsrichtung kurz und kompakt aufgebaut ist.

Die kurze und kompakte Bauform des Anbauhäckslers bewirkt, dass das auf die Hinterachse des Schleppers wirkende Gewicht klein genug ist, um die Vorderachse nicht zu stark zu entlasten. Weiterhin sind dadurch ein Hebelarm, mit dem der Anbauhäcksler, beziehungsweise eine Häckselanordnung umfassend den Anbauhäcksler und ein an diesen angebautes Vorsatzgerät, auf das Front- oder Heckhubwerk des Schleppers wirkt, und ein Schwerpunktabstand des Anbauhäckslers vom Schlepper möglichst klein.

Im Vergleich zu einem Anbauhäcksler, dessen Schwerpunktabstand vom Schlepper größer ist, kann an den erfindungsgemäßen Anbauhäcksler daher ein größeres Vorsatzgerät angebaut werden. Dabei bedarf es dennoch auch bei Anbau des Anbauhäckslers am Heckhubwerk des Schleppers und Nutzung eines großen Vorsatzgerätes, beispielsweise eines 6-, 8- oder sogar 10- reihigen Vorsatzgerätes, keines Gegengewichts an der Front des Schleppers.

Dabei ist es besonders bevorzugt, dass der Förderwinkel in einem Bereich von 15° - 30°, ganz besonders bevorzugt in einem Bereich von 18° - 25° angesiedelt ist.

Dabei ist bei einer bevorzugten vorteilhaften Ausführungsform ein oberer Kanalweg des Förderkanals im Vorpressaggregat kürzer als ein unterer Kanalweg. Das Vorpressaggregat weist dafür bevorzugt zwei obere und drei untere Vorpresswalzen auf, zwischen denen sich der Förderkanal erstreckt. Dabei können die beiden jeweils in Gutflussrichtung vorderen Vorpresswalzen größer als die ihnen in Gutflussrichtung nachgeordneten Vorpresswalzen vorgesehen sein.

In einer bevorzugten Ausführungsform, die die Aufgabe ebenfalls löst, ist der Auswurfstutzen relativ zu einer Erstreckungsrichtung, die sich quer zu einer Arbeitsrichtung des Anbauhäckslers, insbesondere in einem Erntebetrieb, erstreckt, in Arbeitsrichtung geneigt. Dabei ist die Erstreckungsrichtung in ebenem Gelände im Wesentlichen die vertikale Richtung.

Durch die Neigung des Auswurfstutzens in Arbeitsrichtung relativ zur Erstreckungsrichtung kann der Anbauhäcksler trotz, insbesondere etwa auf Höhe des Heckhubwerks angeordneter, Kabinenanbauten des den Anbauhäcksler tragenden Schleppers näher an diesen angebaut werden. Der Anbauhäcksler kann daher, auch bei Nutzung eines Schleppers mit gedrehter Kabine und Kabinenaufbauten oberhalb des Heckhubwerks, sehr nach an den Schlepper angebaut werden.

Durch den Anbau des Anbauhäckslers in möglichst geringem Abstand zum Schlepper wird ein Schwerpunkt des Anbauhäckslers in Richtung zum Schlepper hin verlagert. Dadurch ist der Hebelarm, mit dem der Anbauhäcksler, beziehungsweise eine Häckselanordnung auf das Front- oder Heckhubwerk des Schleppers wirkt, möglichst klein. Das durch den Anbauhäcksler beziehungsweise die Häckselanordnung auf das Front- oder Heckhubwerk wirkende Gewicht ist dadurch geringer als bei einem ansonsten baugleichen Anbauhäcksler, bei dem der Auswurfstutzen keine Neigung in Arbeitsrichtung aufweist, oder sogar gegen die Arbeitsrichtung geneigt ist.

Im Vergleich zu einem Anbauhäcksler, dessen Schwerpunktabstand vom Schlepper größer ist, kann auch an diesen Anbauhäcksler ein größeres Vorsatzgerät angebaut werden. Dabei ist es bevorzugt, dass sich der Auswurfstutzen an einem Gehäuse des Anbauhäckslers, insbesondere an einem Gehäuse des Vorpressaggregats oder des Zerkleinerungsaggregats, abstützt. Ein Neigungswinkel, um den der Auswurfstutzen relativ zur Erstreckungsrichtung in Arbeitsrichtung geneigt ist, ist bevorzugt in einem Bereich von etwa 4° - 15° angesiedelt. Besonders bevorzugt ist der Neigungswinkel in einem Bereich von etwa 7° - 10° angesiedelt.

In einer bevorzugten Ausführungsform weist der Anbauhäcksler zum Antrieb seiner Aggregate, insbesondere des Vorpressaggregats und/oder des Zerkleinerungsaggregats, einen Zapfwellenanschluss zum Anschließen an eine Zapfwelle des Schleppers auf. Die Nutzung der Zapfwelle des Schleppers zum Antrieb der Aggregate ermöglicht eine große Ernteleistung des Anbauhäckslers, und somit die Auslegung des Anbauhäckslers in einem dem leistungsstarken Schlepper entsprechenden Maß. Der Anschluss des Anbauhäckslers an die Zapfwelle erfordert jedoch einen Mindestabstand des Anbauhäckslers vom Schlepper.

Die Neigung des Auswurfstutzens ermöglicht bei Nutzung der Zapfwelle des Schleppers zum Antrieb des Anbauhäckslers den Anbau des Anbauhäckslers an den Schlepper mit minimiertem Abstand.

Um eine möglichst symmetrische Belastung des Anbauhäckslers zu erzielen, durch die der Schwerpunkt des Anbauhäckslers in einer diesen etwa mittig durchsetzenden Ebene, die durch die Erstreckungsrichtung und die Arbeitsrichtung aufgespannt ist, angesiedelt ist, ist es bevorzugt, dass der Auswurfstutzen in vertikaler Richtung oberhalb des Kanalanschlusses und in Arbeitsrichtung fluchtend zum Kanalanschluss angeordnet ist.

Das Zerkleinerungsaggregat weist bevorzugt eine Gegenschneide sowie eine Häckseltrommel auf, zwischen denen das Erntegut häckselbar ist. Weiterhin bevorzugt erstreckt sich der Förderkanal zwischen der Häckseltrommel und einem Förderboden, der zumindest bereichsweise konzentrisch zur Häckseltrommel angeordnet ist.

Dabei ist es bevorzugt, dass ein Umschlingungswinkel des Förderkanals um die Häckseltrommel unabhängig von einer Anbauhöhe und/oder einem Anbauwinkel des Anbauhäckslers an den Schlepper relativ zum Erdboden ist. Dafür sind das Zerkleinerungsaggregat und das Vorpressaggregat bevorzugt starr miteinander verbunden. Ein Häckselwinkel, in dem das Erntegut vom Vorpressaggregat in das Zerkleinerungsaggregat einläuft und zwischen der Gegenschneide und der Häckseltrommel geschnitten wird, ist daher immer gleich. Er liegt bevorzugt etwa bei 80° - 100°, besonders bevorzugt bei etwa 90°.

Zusätzlich oder alternativ ist der Umschlingungswinkel bevorzugt größer als 115°, besonders bevorzugt etwa 125° - 165°, ganz besonders bevorzugt etwa 145° vorgesehen. Der große Umschlingungswinkel bewirkt zwar eine vergrößerte Reibung des Ernteguts entlang des Förderbodens. Jedoch kann dadurch das Erntegut etwa geradlinig in den zur Erstreckungsrichtung in Arbeitsrichtung geneigten Auswurfstutzen ausgeworfen werden.

Der Auswurfstutzen ist dafür bevorzugt ortsfest am Gehäuse des Anbauhäckslers angeordnet, und ändert daher seine Position relativ zu Häckseltrommel nicht.

Der steile Förderkanal im Vorpressaggregat, der große Umschlingungswinkel sowie die Neigung des Auswurfstutzens erfordern eine höhere Antriebsleistung gegenüber einem in Bezug auf den Gutfluss optimierten Verlauf des Förderkanals. Diese Maßnahmen ermöglichen demgegenüber aber eine kompakte, kurze Bauform und einen sehr kurzen Abstand des an den Schlepper angebauten Anbauhäckslers von diesem. Dadurch ist der Schwerpunktabstand des Anbauhäckslers vom Schlepper optimiert. Dadurch ist der Anbauhäcksler auch mit großen Vorsatzgeräten am Schlepper betreibbar.

Die Aufgabe wird weiterhin gelöst mit einer Häckselanordnung, die einen Anbauhäcksler mit einem Kanalanschluss aufweist, insbesondere einen solchen Anbauhäcksler, sowie ein Vorsatzgerät, das am Kanalanschluss des Anbauhäckslers angebaut ist. Vorzugsweise weist das Vorsatzgerät einen Vorsatzförderkanal auf, durch den das Erntegut dem Kanalanschluss des Anbauhäckslers zuförderbar ist. Dabei ist es weiterhin bevorzugt, dass der Anbauhäcksler einen Förderkanal aufweist, der sich an den Kanalanschluss anschließt.

In einer bevorzugten Ausführungsform verläuft der Vorsatzförderkanal des Vorsatzgerätes in einem an den Kanalanschluss angrenzenden Bereich in einem spitzen Eintrittswinkel zur Arbeitsrichtung, insbesondere in ebenem Gelände zum Erdboden und/oder der Horizontalen, und der Förderkanal des Anbauhäckslers in einem an den Kanalanschluss angrenzenden Bereich in einem spitzen Förderwinkel zum Vorsatzförderkanal des Vorsatzgerätes.

Dabei ist es besonders bevorzugt, dass der Anbauwinkel in dem Bereich von 15° - 30° angesiedelt ist. Ganz besonders bevorzugt beträgt der Anbauwinkel etwa 18° - 25°.

Durch den verhältnismäßig steilen Anstieg des Förderkanals im Vorpressaggregat ist der Anbauhäcksler kompakt baubar und weist eine kurze Länge in Arbeitsrichtung auf. Ein Hebelarm, mit dem die Häckselanordnung auf das Front- oder Heckhubwerk des Schleppers, an den sie angebaut ist, wirkt, ist dadurch gegenüber einem Förderkanal mit flacherem Anstieg im Vorpressaggregat geringer. Dadurch kann an die Häckselanordnung ein großes Vorsatzgerät angebaut werden.

Die Aufgabe wird weiterhin gelöst mit einem Arbeitszug umfassend einen solchen Anbauhäcksler oder eine solche Häckselanordnung. Der Arbeitszug weist einen Schlepper, insbesondere mit 500PS und mehr, auf, an den der Anbauhäcksler, insbesondere front- oder heckseitig, insbesondere am Fronthubwerk oder am Heckhubwerk, angebaut ist. Am Anbauhäcksler des Arbeitszugs ist ein modulares Vorsatzgerät anbaubar oder angebaut, und zum Ernten von Erntegut betreibbar. Dabei kann das Vorsatzgerät sechsreihig oder größer ausgebildet sein.

Bei dem Anbauhäcksler wird bewusst eine in Bezug auf die Umlenkung des Ernteguts insbesondere in Erstreckungsrichtung und/oder Arbeitsrichtung sowie in Bezug auf den Umschlingungswinkel nicht optimaler Verlauf des Förderkanals in Kauf genommen. Dies ermöglicht im Gegenzug, den Schwerpunktabstand des Anbauhäckslers vom Schlepper, insbesondere von der ihn tragenden Achse, zu optimieren. Dadurch wird das auf das Hubwerk wirkende Gewicht so verringert, dass der Anbau eines großen Vorsatzgerätes an den Schlepper möglich ist. Der Anbauhäcksler ist dabei für große Schlepper ausgelegt.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: in (a) in einer Seitenansicht einen Arbeitszug im Feldbetrieb, mit einem Schlepper im Rückwärtsfahrbetrieb, an den eine Häckselanordnung angebaut ist, die einen Anbauhäcksler in einer Maisernteanordnung und ein an diesen modular angebautes Vorsatzgerät umfasst, und in (b) den Arbeitszug aus (a) in einer, eine Front des Anbauhäckslers und des Vorsatzgerätes zeigenden Ansicht;
- Fig. 2: in (a) die Häckselanordnung mit dem Anbauhäcksler und dem Vorsatzgerät aus Fig. 1 in einem Schnittbild, und in (b) eine Häckselanordnung in einer Seitenansicht, umfassend den Anbauhäcksler aus Fig. 1 in einer Heuernteanordnung und ein Vorsatzgerät eines anderen Typs; und
- Fig. 3: den Arbeitszug aus Fig. 1 in einer Seitenansicht im Straßenbetrieb.

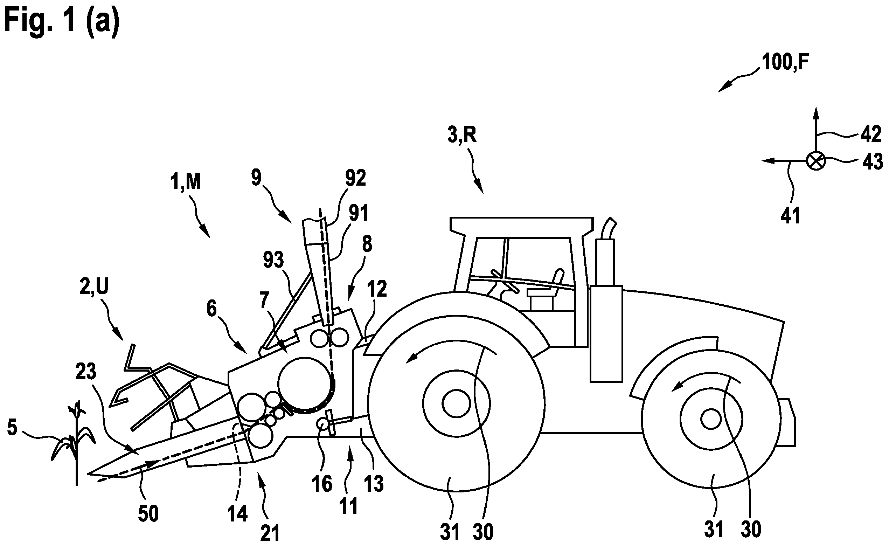

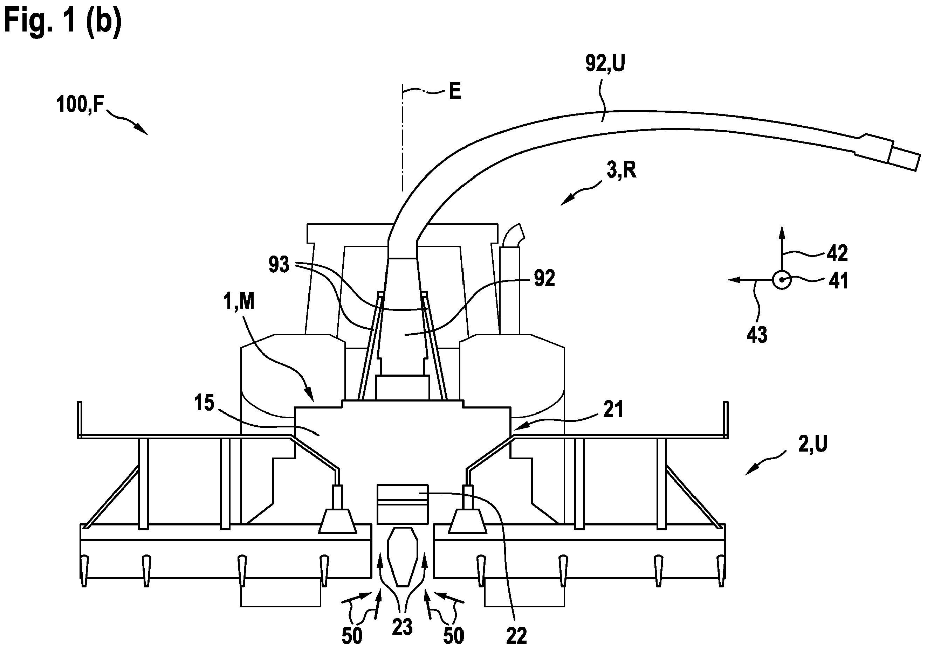

Fig. 1 zeigt einen Arbeitszug 100 mit einem Schlepper 3, an den eine Häckselanordnung angebaut ist, die einen Anbauhäcksler 1 umfasst, sowie ein an den Anbauhäcksler 1 modular angebautes Vorsatzgerät 2. Der Anbauhäcksler 1 ist hier an das Heckhubwerk 11 des Schleppers 3 angebaut. Sichtbar ist die Anlenkung des Anbauhäckslers 1 an das Heckhubwerk 11 des Schleppers 3 mittels Unterlenkern 13 und eines Oberlenkers 12. Zudem ist in der Figur ein Zapfwellenanschluss 16 zum Anschluss des Anbauhäckslers 1 an eine Zapfwelle (nicht gezeigt) des Schleppers 3 schematisch gezeigt. Der Anbauhäcksler 1 ist über die Zapfwelle des Schleppers 3 antreibbar.

Die Darstellung zeigt den Arbeitszug 100 in einem Feldbetrieb F, in dem die Häckselanordnung zum Ernten und Häckseln von Erntegut 5, insbesondere Mais, genutzt wird. Der Schlepper 3 wird dabei im Rückwärtsfahrbetrieb R betrieben. Der Rückwärtsfahrbetrieb R ist hier schematisch durch die Drehrichtung 30 der Räder 31 des Schleppers 3 dargestellt.

Als Vorsatzgerät 2 ist hier beispielhaft ein Vorsatzgerät 2 zum Ernten von Mais gezeigt. Der Anbauhäcksler 2 ist aber auch mit Vorsatzgeräten 2 eines anderen Typs betreibbar, beispielsweise mit Vorsatzgeräten 2 zum Ernten von Ganzpflanzen oder zum Ernten von Gras oder Heu, insbesondere mit einem Mähwerk zum Schneiden von Gras oder mit einer Pick- up zur Aufnahme von Gras oder Heu.

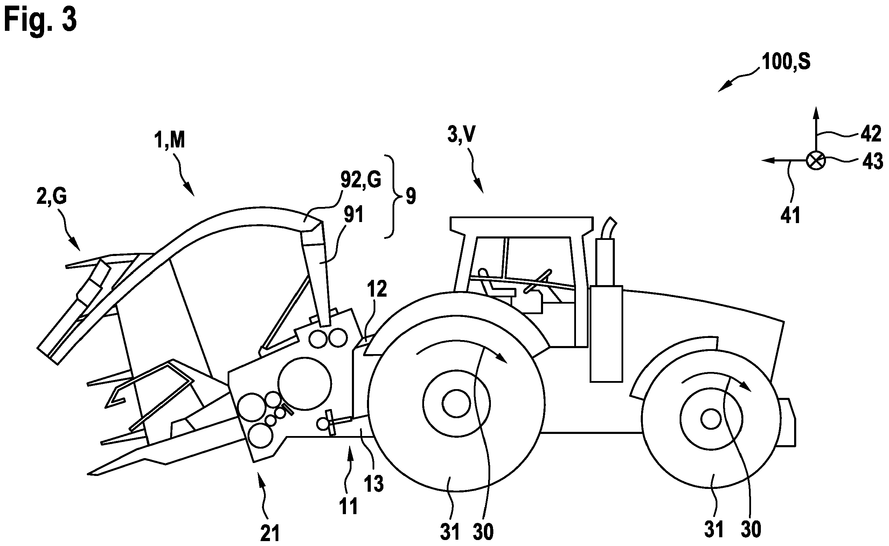

Das Vorsatzgerät 2 kann zu Transportzwecken eingeklappt G werden (s. Fig. 3). Im Feldbetrieb F ist es nicht eingeklappt U (ungeklappt).

Das Erntegut 5 wird mit dem Vorsatzgerät 2 geschnitten und/oder aufgenommen und dem Anbauhäcksler 1 durch einen Vorsatzförderkanal 23 in eine Gutflussrichtung 50 zugeführt. Es ist an einen Kanalanschluss 21 des Anbauhäckslers 1 angebaut. Der Kanalanschluss 21 weist eine Kanalöffnung 22 auf, durch die das Erntegut 5 in einen Förderkanal 14 des Anbauhäckslers 1 gefördert wird.

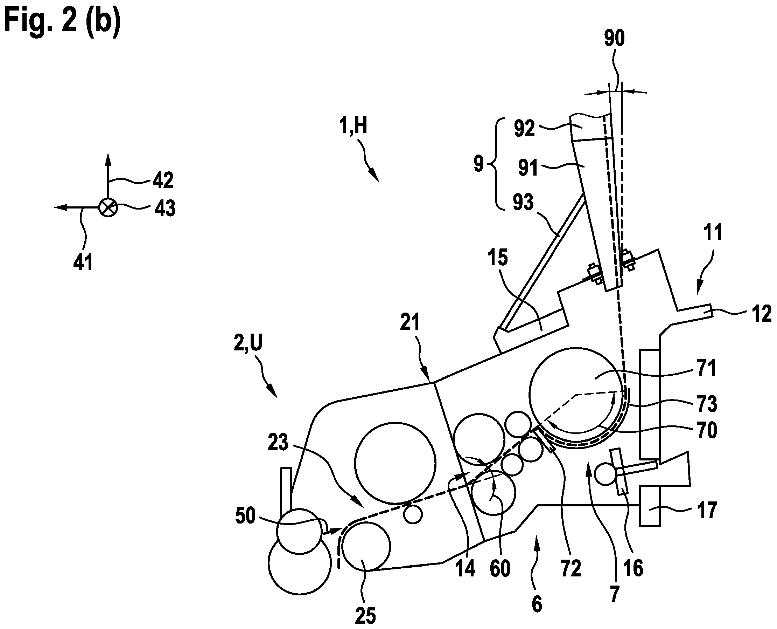

Der Anbauhäcksler 1 ist in Fig. 1 in einer Maisernteanordnung M gezeigt. In der Maisernteanordnung M ist in den Anbauhäcksler 1 ein Aufbereiter 8 aufgenommen, der zum Aufbrechen der Maiskörner vorgesehen ist, damit die Stärke im Innern der Maiskörner von außen zugänglich ist, und der Mais von Nutztieren verwertbar ist. Zudem kann der Aufbereiter 8 bei der Ernte von Ganzpflanzen zur Zerkleinerung von Getreidekörnern eingesetzt werden. Der Aufbereiter 8 ist in einer Heuernteanordnung H, die Fig. 2 (b) zeigt, nicht im Anbauhäcksler 1 vorgesehen, um ein Zerfasern des Grases oder Heus bei der Ernte zu vermeiden.

Der Anbauhäcksler 1 weist ein Vorpressaggregat 6 auf, dass sich dem Kanalanschluss 21 unmittelbar anschließt. Das Vorpressaggregat 6 ist in einer Arbeitsrichtung 41, in der der Anbauhäcksler 1 im Feldbetrieb F über ein Feld (nicht bezeichnet) gefahren wird, vorne angeordnet. Es ist dem Kanalanschluss 21 unmittelbar nachgeordnet. Das Erntegut 5 fließt daher vom Vorsatzgerät 2 aus durch die Kanalöffnung 22 unmittelbar in das Vorpressaggregat 6 ein.

Das Vorpressaggregat 6 weist hier fünf Förderwalzen 61 - 65 auf, die den Förderkanal 14 begrenzen. Dabei sind zwei der Vorpresswalzen 61, 62 als obere, und drei als untere Vorpresswalzen 63, 64, 65 vorgesehen.

Dem Vorpressaggregat 6 ist in Gutflussrichtung 50 ein Zerkleinerungsaggregat 7 nachgeordnet. Das Zerkleinerungsaggregat 7 umfasst eine Gegenschneide 72 sowie eine Häckseltrommel 71, zwischen denen das Erntegut 5 gehäckselt wird. Die Gegenschneide 72 ist hinter der letzten unteren Vorpresswalze 65 angeordnet und so positioniert, dass das Erntegut 5 etwa rechtwinkelig in die Häckseltrommel 71 einfließt. Dadurch kann ein möglichst glatter Schnitt erfolgen, ohne dass das Erntegut 5 dabei zerfasert.

Prinzipiell können im Zerkleinerungsaggregat 7 zum Häckseln des Ernteguts auch Scheibenräder (nicht gezeigt) verwendet werden. Jedoch ist mit der Häckseltrommel 71 eine erheblich bessere, gleichbleibend gute Häckselqualität erreichbar. Das bezüglich der gestellten Aufgabe wichtige höhere Gewicht der Häckseltrommel 71 gegenüber Scheibenrädern ist hier daher zugunsten der besseren Häckselqualität bewusst in Kauf genommen.

Die Häckseltrommel 71 wird im Betrieb des Anbauhäckslers 1 um eine Häckselachse (nicht bezeichnet) in eine Häckseldrehrichtung (nicht bezeichnet) gedreht. An der Häckseltrommel 71 sind in Häckseldrehrichtung gleichmäßig verteilt Häckselmesser (nicht gezeigt) angeordnet, die zum Schneiden des Ernteguts 5 vorgesehen sind. Im Betrieb des Anbauhäckslers 1 drehen sich die Häckselmesser mit der Häckseltrommel 71 in die Häckseldrehrichtung. Dabei gerät das Erntegut 5 in Eingriff der Häckselmesser und wird jeweils zwischen einem der Häckselmesser und der Gegenschneide 72 geschnitten.

Der Förderkanal 14 ist im Zerkleinerungsaggregat 7 durch die Häckseltrommel 71 und einen sich wenigstens bereichsweise konzentrisch zur Häckseltrommel 71 erstreckenden Förderboden 73 begrenzt.

Der Aufbereiter 8 ist dem Zerkleinerungsaggregat 7 in Gutflussrichtung 50 nachgeordnet. Er weist zwei Crackerwalzen 81, 82 auf. Die Crackerwalzen 81, 82 drehen sich im Betrieb des Anbauhäckslers 1 jeweils um eine Crackerachse (nicht bezeichnet) in eine Crackerdrehrichtung (nicht bezeichnet), wobei die Crackerdrehrichtungen der beiden Crackerwalzen 81, 82 entgegengesetzt zueinander sind. Der Mais wird im Betrieb des Anbauhäckslers 1 zwischen den Crackerwalzen 81, 82 hindurch gefördert. Dabei wird die Schale der Maiskörner oder Getreidekörner aufgebrochen, so dass die Stärke im Innern der Maiskörner zugänglich ist. Im Aufbereiter 8 erstreckt sich der Förderkanal 14 daher zwischen den Crackerwalzen 81, 82.

Anschließend wird das gehäckselte Erntegut 5 durch eine Auswurfeinheit 9 ausgeworfen. Die Auswurfeinheit 9 weist einen Auswurfstutzen 91 auf, der ortsfest am Gehäuse 15 des Anbauhäckslers 1 befestigt ist. Am Auswurfstutzen 91 ist ein Auswurfrohr 92 befestigt, das als Verlängerung dient, und mit dem das Erntegut 5 auf einen Ladewagen (nicht gezeigt) ausgeworfen werden kann. Vom Auswurfrohr 92 zeigt Fig. 1 (a) nur ein Teilstück. Das vollständige Auswurfrohr 92 ist in Fig. 1 (b) dargestellt. In der Auswurfeinheit 9 ist der Förderkanal 14 daher durch den Auswurfstutzen 91 und das Auswurfrohr 92 begrenzt.

An einem offenen Ende (nicht bezeichnet) des Auswurfrohrs 92 ist eine verstellbare Auswurfklappe (nicht bezeichnet) vorgesehen, mit dem ein Auftreffpunkt des Ernteguts 5 im Ladewagen einstellbar ist.

Fig. 1 (b) zeigt den Arbeitszug 100 aus Fig. 1 (a) in einer, eine Front des Anbauhäckslers 1 und des Vorsatzgerätes 2 zeigenden Ansicht.

Der Arbeitszug 100 befindet sich im Feldbetrieb F. Daher ist auch hier der Anbauhäcksler 1 am Heckhubwerk 11 des Schleppers 3 angebaut. Der Schlepper 3 befindet sich daher analog zur Fig. 1 (a) im Rückwärtsfahrbetrieb R. Zudem ist das Vorsatzgerät 2 daher nicht eingeklappt U.

Sichtbar sind der Vorsatzförderkanal 23 sowie die Kanalöffnung 22 des Kanalanschlusses 21. Das Erntegut 5 wird durch den Vorsatzförderkanal 23 der Kanalöffnung 22 in Gutflussrichtung 50 zugeführt und dort vom Anbauhäcksler 1 aufgenommen.

Zudem zeigt Fig. 1 (b), dass der Anbauhäcksler 1 mittig am Schlepper 3 angeordnet ist. Dadurch ist ein Schwerpunkt (nicht dargestellt) des Anbauhäckslers 1 in einer diesen etwa mittig durchsetzenden Ebene E, die durch eine Erstreckungsrichtung 42, die sich quer zur Arbeitsrichtung 41 erstreckt, und die Arbeitsrichtung 41 aufgespannt ist, angesiedelt. In einer Querrichtung 43 quer zur Erstreckungsrichtung 42 und zur Arbeitsrichtung 41 durchsetzt die Ebene E den Arbeitszug 100 etwa mittig.

Das Erntegut 5 wird dadurch mittig des Anbauhäckslers 1 eingezogen. Weiterhin ist der Auswurfstutzen 91 der Auswurfeinheit 9 mittig am Gehäuse 15 des Anbauhäckslers 1 montiert. Das Erntegut 5 wird somit nach Eintritt durch die Kanalöffnung 22 in den Anbauhäcksler 1 nicht mehr wesentlich in oder gegen die Querrichtung 43 umgelenkt, bis es durch den Auswurfstutzen 91 in das Auswurfrohr 92 eingeleitet wird. Erst dort wird es in Richtung des Ladewagens umgelenkt, der seitlich oder hinter dem Schlepper 3 fahren kann. Der Anbauhäcksler 1, insbesondere seine Aggregate 6, 7, wird dadurch im Wesentlichen symmetrisch zur Ebene E ausgelastet.

Weiterhin zeigt Fig. 1 (b), dass sich der Auswurfstutzen 91 mittels zwei symmetrisch zur Ebene E angeordneter Streben 93 am Gehäuse 15 des Anbauhäckslers 1 abstützt.

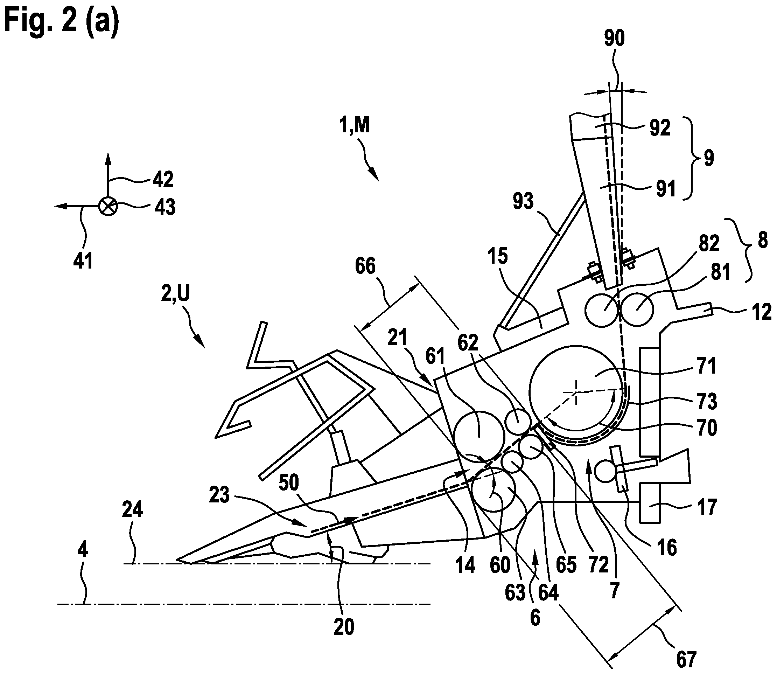

Fig. 2 (a) zeigt die Häckselanordnung mit dem Anbauhäcksler 1 und dem Vorsatzgerät 2 aus Fig. 1 in einem Schnittbild.

Die Häckselanordnung ist gegenüber dem Erdboden 4 angehoben, so dass sich Schneidwerkzeuge (nicht gezeigt) des Vorsatzgerätes 2 auf einer Schnittebene 24 befinden. Die Schnittebene 24 verläuft dabei parallel zur Arbeitsrichtung 41 und/oder zum Erdboden 4. In ebenem Gelände verläuft die Schnittebene 24 im Wesentlichen horizontal. Von dieser ausgehend wird das geschnittene Erntegut 5 in einem spitzen Eintrittswinkel 20 durch die Kanalöffnung 22 des Kanalanschlusses 21 in den Anbauhäcksler 1 gefördert. Dafür weist der Vorsatzförderkanal 23 den spitzen Eintrittswinkel 20 gegenüber der Schnittebene 24 beziehungsweise dem Erdboden 4 auf.

Das sich unmittelbar an den Kanalanschluss 21 anschließende Vorpressaggregat 6 weist die fünf Vorpresswalzen 61 - 65 auf. Die Vorpresswalzen 61 - 65 sind zum Fördern und Pressen des Ernteguts ausgebildet. Dafür werden sie jeweils in eine Drehrichtung (nicht bezeichnet) um eine Drehachse (nicht bezeichnet) gedreht. Dabei ist die Drehrichtung der oberen Vorpresswalzen 61, 62 zu den unteren Vorpresswalzen 63 - 65 gegensätzlich vorgesehen. Dadurch wird das Erntegut 5 zwischen den Vorpresswalzen 61 - 65 in Gutflussrichtung 50 gefördert und dabei gepresst. Nach dem Pressen wird es der Zerkleinerungsvorrichtung 7 unmittelbar zugeführt.

Der sich zwischen den Vorpresswalzen 61 - 65 erstreckende Förderkanal 14 weist einen spitzen Förderwinkel 60 gegenüber dem Vorsatzförderkanal 23 auf. Trotz eines aufgrund der drei unteren Vorpresswalzen 63 - 65 verhältnismäßig langen unteren Kanalweges 67 ist der Anbauhäcksler 1 durch den steilen Anstieg des Förderkanals 14 verhältnismäßig kurz. Es hat sich dabei als vorteilhaft erwiesen, dass ein durch die beiden oberen Vorpresswalzen 61, 62 gebildeter oberer Kanalweg 66 kürzer als der untere Kanalweg 67 ist.

Das Erntegut 5 wird in dem etwa rechten Winkel (nicht bezeichnet) der Häckseltrommel 71 zugeführt und dort zwischen Gegenschneide 72 und jeweils einem an der Häckseltrommel 71 angeordneten Häckselmesser geschnitten. Dann wird es in dem durch die Häckseltrommel 71 und den Förderboden 73 begrenzten Teil des Förderkanals 14 in Richtung zum Auswurfstutzen 91 gefördert. Dabei durchfließt es den Aufbereiter 8.

Um das Erntegut 5 möglichst geradlinig in Richtung des Auswurfstutzens 91 zu werfen, ist ein Umschlingungswinkel 70, in dem das Erntegut 5 die Häckseltrommel 71 im Wesentlichen konzentrisch umläuft, groß vorgesehen.

Der Auswurfstutzen 91 ist weiterhin gegenüber der Erstreckungsrichtung 42, das ist in ebenem Gelände etwa die vertikale Richtung, in Arbeitsrichtung 41 um einen Neigungswinkel 90 geneigt. Den Neigungswinkel 90 nimmt der Auswurfstutzen 91 in einem Anbauzustand ein, in dem der Oberlenker 12 des den Anbauhäcksler 1 tragenden Hubwerks 11 angezogen ist und/oder ein Gehäuserahmen 17 des Gehäuses 15 in ebenem Gelände im Wesentlichen vertikal ausgerichtet ist. Dadurch kann eine Kollision mit Kabinenaufbauten (nicht gezeigt) vermieden werden, von Schleppern 3, bei denen im Rückwärtsfahrbetrieb R die Fahrerkabine (nicht bezeichnet) gedreht ist.

Die Neigung im Neigungswinkel 90 ermöglicht zudem beim Anbau des Anbauhäckslers 1 an das Heckhubwerk 11, insbesondere eines solchen Schleppers 3 einen sehr geringen Abstand (nicht bezeichnet) von diesem.

Diese Maßnahmen, insbesondere der gewählte Neigungswinkel 90, der Umschlingungswinkel 70 sowie der Förderwinkel 60, bewirken, dass ein Schwerpunktabstand (nicht dargestellt) des Anbauhäckslers 1 vom Schlepper 3, insbesondere von seiner Hinterachse (nicht gezeigt) bei Rückwärtsfahrbetrieb R, optimiert ist. Das auf die Hinterachse wirkende Gewicht der Häckselanordnung ist dadurch ausreichend gering, so dass auch noch große modulare Vorsatzgeräte 2 am Anbauhäcksler 1 betreibbar sind, ohne frontseitig des Schleppers 3 Gegengewichte (nicht gezeigt) benutzen zu müssen.

Der Anbauhäcksler 1 ist in Fig. 2 (b) in einer Heuernteanordnung H gezeigt. Er unterscheidet sich daher vom Anbauhäcksler 1 der Fig. 1 (a) und (b) sowie 2 (a) darin, dass er keinen Aufbereiter 8 aufweist, der der Häckseltrommel 71 nachgeordnet ist. Bei der Heu- oder Grasernte wird das Erntegut 5 daher nach dem Häckseln direkt durch den Förderkanal 14 und den Auswurfstutzen 91, und von dort aus durch das Auswurfrohr 92 auf den Ladewagen geworfen.

Weiterhin unterscheidet sich die Häckselanordnung der Fig. 2 (b) durch das am Anbauhäcksler 1 angebaute Vorsatzgerät 2. Dieses weist eine Pick- up 25 auf und eignet sich zum Aufnehmen von Schwaden aus Heu oder Gras.

Fig. 3 zeigt den Arbeitszug 100 aus Fig. 1 in einem Straßenbetrieb S. Im Straßenbetrieb S fährt der Schlepper 3 im Vorwärtsfahrbetrieb V gegen die Arbeitsrichtung 41. Dies ist anhand der Drehrichtung 30 der Räder 31 schematisch gezeigt.

Dabei ist das Auswurfrohr 92 in Arbeitsrichtung 41 ausgerichtet und abgesenkt. Zudem ist ein hinteres Rohrteil (nicht bezeichnet) gegenüber einem vorderen Rohrteil (nicht bezeichnet) eingeklappt, so dass das Auswurfrohr 92 den Anbauhäcksler 1 in Arbeitsrichtung 41 weniger weit überragt.

Das Vorsatzgerät 2 befindet sich zudem in einem eingeklappten Zustand G, und überragt den Schlepper 3 daher in oder gegen die Querrichtung 43 nicht.

## Patentansprüche

1. Anbauhäcksler (1), der zum Anbauen an einen Schlepper (3), insbesondere an ein Front- oder Heckhubwerk eines Schleppers (3), vorgesehen ist, und der einen Kanalanschluss (21) zum Anbauen eines Vorsatzgerätes (2), das zum Ernten von Erntegut (5) vorgesehen ist, aufweist, wobei sich dem Kanalanschluss (21) in einer Gutflussrichtung (50) ein Förderkanal (14) anschließt, der ein Vorpressaggregat (6) und ein diesem nachgeordnetes Zerkleinerungsaggregat (7) durchsetzt, wobei dem Zerkleinerungsaggregat (7) ein Auswurfstutzen (91) nachgeordnet ist, durch den das Erntegut (5) auswerfbar ist,
**dadurch gekennzeichnet, dass**
sich das Vorpressaggregat (6) unmittelbar am Kanalanschluss (21) anschließt und wenigstens zwei Vorpresswalzen (61 - 62) oder mehr umfasst, wobei der Förderkanal (14) im Vorpressaggregat (6) einen spitzen Förderwinkel (60) zu einem Eintrittswinkel (20) des Ernteguts (5) in den Kanalanschluss (21) aufweist.

2. Anbauhäcksler (1) nach Anspruch 1, **dadurch gekennzeichnet, dass** ein oberer Kanalweg (66) des Förderkanals (14) im Vorpressaggregat (6) kürzer als ein unterer Kanalweg (67) ist.

3. Anbauhäcksler (1) nach einem der vorherigen Ansprüche, **dadurch gekennzeichnet, dass** das Vorpressaggregat (6) zwei obere (61, 62) und drei untere Vorpresswalzen (63 - 65) aufweist, zwischen denen sich der Förderkanal (14) erstreckt.

4. Anbauhäcksler (1) nach einem der vorherigen Ansprüche, **dadurch gekennzeichnet, dass** der Förderwinkel (60) etwa 15° - 30°, insbesondere etwa 18° - 25° beträgt.

5. Anbauhäcksler (1) nach dem Oberbegriff des Anspruchs 1 oder nach einem der vorherigen Ansprüche, **dadurch gekennzeichnet, dass** der Auswurfstutzen (91) relativ zu einer Erstreckungsrichtung (42), die sich quer zu einer Arbeitsrichtung (41) des Anbauhäckslers (1) erstreckt, in Arbeitsrichtung (41) geneigt ist.

6. Anbauhäcksler (1) nach einem der vorherigen Ansprüche, **dadurch gekennzeichnet, dass** der Auswurfstutzen (91) ortsfest an einem Gehäuse (15) des Anbauhäckslers (1) angeordnet ist.

7. Anbauhäcksler (1) nach einem der vorherigen Ansprüche, **dadurch gekennzeichnet, dass** sich der Auswurfstutzen (91) am Gehäuse (15) des Anbauhäckslers (1) abstützt.

8. Anbauhäcksler (1) nach einem der vorherigen Ansprüche, **dadurch gekennzeichnet, dass** der Auswurfstutzen (91) relativ zur Erstreckungsrichtung (42) um einen Neigungswinkel (90) von etwa 4 - 15°, insbesondere von etwa 7 - 10° in Arbeitsrichtung (41) geneigt ist.

9. Anbauhäcksler (1) nach einem der vorherigen Ansprüche, **dadurch gekennzeichnet, dass** der Auswurfstutzen (91) in Erstreckungsrichtung (42) oberhalb einer Kanalöffnung (22) des Kanalanschlusses (21) angeordnet ist, **dadurch gekennzeichnet, dass** der Auswurfstutzen (91) in Arbeitsrichtung (41) fluchtend zur Kanalöffnung (22) angeordnet ist.

10. Anbauhäcksler (1) nach einem der vorherigen Ansprüche, **dadurch gekennzeichnet, dass** er zum Antrieb seiner Aggregate (6, 7) einen Zapfwellenanschluss (16) zum Anschließen an eine Zapfwelle des Schleppers (3) aufweist.

11. Anbauhäcksler (1) nach einem der vorherigen Ansprüche, **dadurch gekennzeichnet, dass** das Zerkleinerungsaggregat (7) eine Gegenschneide (72) sowie eine Häckseltrommel (71) aufweist, zwischen denen das Erntegut (5) häckselbar ist, wobei sich der Förderkanal (14) zwischen der Häckseltrommel (7) und einem Förderboden (73), der zumindest bereichsweise konzentrisch zur Häckseltrommel (71) angeordnet ist, erstreckt, wobei ein Umschlingungswinkel (70) des Förderkanals (14) um die Häckseltrommel (71) größer als 115°, insbesondere etwa 125° - 165°, weiter insbesondere etwa 145° vorgesehen ist.

12. Anbauhäcksler (1) nach einem der vorherigen Ansprüche, **dadurch gekennzeichnet, dass** das Vorpressaggregat (6) und das Zerkleinerungsaggregat (7) starr miteinander verbunden sind.

13. Häckselanordnung, die einen Anbauhäcksler (1) mit einem Kanalanschluss (21) aufweist, insbesondere einen Anbauhäcksler (1) nach einem der vorherigen Ansprüche, sowie ein Vorsatzgerät (2), dass am Kanalanschluss (21) des Anbauhäckslers (1) angebaut ist, wobei das Vorsatzgerät (2) einen Vorsatzförderkanal (23) aufweist, durch den Erntegut (5) dem Kanalanschluss (21) des Anbauhäckslers (1) zuförderbar ist, wobei der Anbauhäcksler (1) einen Förderkanal (14) aufweist, der sich an den Kanalanschluss (21) anschließt, wobei der Vorsatzförderkanal (23) des Vorsatzgerätes (2) in einem an den Kanalanschluss (21) angrenzenden Bereich in einem spitzen Eintrittswinkel (20) zum Erdboden (4) verläuft und der Förderkanal (14) des Anbauhäckslers (1) in einem an den Kanalanschluss (21) angrenzenden Bereich in einem spitzen Förderwinkel (60) zum Vorsatzförderkanal (23) des Vorsatzgerätes (2).

14. Arbeitszug (100) umfassend einen Schlepper (3), einen Anbauhäcksler (1) nach einem der Ansprüche 1 - 12 oder eine Häckselanordnung nach Anspruch 13, wobei der Anbauhäcksler (1) an ein Hubwerk des Schleppers (3) angebaut ist.
